# EUROPEAN PATENT SPECIFICATION

(11) **EP 2 129 175 B1**
(45) Date of publication and mention of the grant of the patent: **22.12.2010**
(21) Application number: 08290491.3
(22) Date of filing: 28.05.2008
(51) Int. Cl.: H04W 24/00

(54) **Method of detecting an outage of a radio cell**
Verfahren zum Erkennen eines Funkzellenausfalls
Procédé de détection d'interruption d'une cellule radio

(43) Date of publication of application: 02.12.2009
(73) Proprietor: Alcatel Lucent, 75008 Paris (FR)
(72) Inventor: Bakker, Hajo, 71735 Eberdingen (DE); Kaminski, Stephen, 73054 Eislingen (DE); Weber, Andreas, 74251 Lehrensteinsfeld (DE)
(74) Representative: Schmidt, Werner Karl

(56) References cited:
- EP-A- 1 030 528
- US-B1- 6 438 374

## Description

The present invention relates to a method of detecting an outage of a radio cell, and a base station to execute said method.

The 3GPP Technical Specification TS 36.300 V8.4.0 (2008-03) "Evolved Universal Terrestrial Radio Access (E-UTRA) and Evolved Universal Terrestrial Radio Access Network (E-UTRAN)" Stage 2 (Release 8) gives an overview over a current state of a mobile telecommunication architecture based on UMTS (3GPP = 3rd Generation Partnership Project; UMTS = Universal Mobile Telecommunication System).

A cell outage, i.e. one or more malfunctioning radio cells of a base station, e.g. a LTE eNB, may be detected by the base station associated with the affected radio cell by internal surveillance of processing boards and RF components of the base station (LTE = Long Term Evolution; eNB = E-UTRAN Node B; RF = radio frequency). However, the cell outage will not be detected in any case by an Operations & Maintenance Centre (OMC) associated with the base station because only the affected base station sends an error message related to the cell outage, also called cell outage message, to the OMC. US 6,438,374 presents a method for control message processing should one of the application processors (serving a cell base station) fail.

In case several cell outage messages arrive at the same time at the OMC, some of these cell outage messages may not be processed immediately. In case of a total outage of the base station, e.g. due to an electrical power outage, the corresponding error message might not even be generated. Moreover, the service staff at the OMC often only reacts to a cell outage based on fault reports initiated by subscribers of the radio service. Such a fault report may comprise an indication that there is no service in specific area.

It has to be distinguished whether a cell outage occurs during a "high" traffic situation, i.e. when many mobile terminals (= UEs) are affected, or during a "low" traffic situation (UE = user equipment). In the first case, all UEs in the affected radio cell will contemporaneously try to access surrounding radio cells, while in the second case, e.g. at night, a detection of a cell outage is more complex as no or only a limited number of UEs are active.

It is the object of the present invention to provide an improved method of detecting a cell outage of a radio cell.

The object of the present invention is achieved by a method of detecting an outage of a radio cell in a wireless telecommunication network comprising a plurality of radio cells and two or more base stations, each radio cell associated with a base station providing telecommunication service to at least one user terminal inside the radio cell, the method comprising: monitoring, by at least one of said base stations, call control messages associated with at least one of the user terminals; providing, from the monitored call control messages, one or more indications; comparing said one or more indications with respective references; if an indication differs from the respective reference in excess of a predefined threshold, generating a respective trigger event; and indicating, dependent on one or more of said respective trigger events, that one or more radio cells are affected by an outage. The object of the present invention is further achieved by a base station for detecting an outage of a radio cell in a wireless telecommunication network comprising a plurality of radio cells, said base station, and one or more other base stations, each radio cell associated with a base station providing telecommunication service to at least one user terminal inside the radio cell, the base station comprising a control unit adapted to monitor call control messages associated with at least one of the user terminals; provide, from the monitored call control messages, one or more indications; compare said one or more indications with respective references; if an indication differs from the respective reference in excess of a predefined threshold, generate a respective trigger event; and indicate, dependent on one or more of said respective trigger events, that one or more radio cells are affected by an outage.

A base station may serve one or more radio cells. A radio cell served by a base station is said to be associated with this base station. Every radio cell is associated with a base station. A user terminal located in a radio cell is provided with telecommunication service by the base station serving said radio cell. If the base station or a part of the base station (e.g. sector antenna) stops its service, e.g., due to a power outage, the radio cell associated with the base station or the part of the base station ceases to exist.

The wireless telecommunication network comprises at least two radio cells and at least two base stations. A radio cell associated with a first base station may have one or more neighbouring radio cells associated with one or more second base stations. The second base stations are called neighbouring/surrounding base stations with respect to the first base station.

The present invention allows a first base station neighbouring a second base station to detect an outage of a radio cell associated with the second base station and inform the OMC, possibly in addition to the second base station. Counteractions responding to a cell outage, e.g., an automatic adjustment of power settings, of the amount of available RACH resources, and of the orientation of base station antennas in terms of azimuth and elevation, can also be taken into account (RACH = Random Access Channel).

Therefore, a report of a cell outage towards the OMC is no longer dependent on the base station affected by the cell outage, only. Instead, also a base station neighbouring the affected base station may detect a cell outage of a radio cell associated with the affected base station and inform the OMC. This means that the detection of a cell outage is faster and more reliable.

In case of a total outage of a base station, e.g., due to electrical power outage, the OMC is informed by neighbouring base stations. An automatic adjustment of base station parameters and configuration, e.g., the orientation of the antennas, can be initiated to enhance the coverage in case an outage was detected by neighbouring base stations.

Thus, the present invention provides a better opportunity for the operator to maintain radio services in case of a cell outage, e.g., by a faster reaction time in advance of and instead of complaints of the subscribers.

The present invention is particularly useful in case of normal or high traffic, e.g., during rush hour, In the case of "normal" or "high" traffic a cell outage of a neighbouring radio cell may be detected immediately by surrounding base stations if as sufficient large number of mobile terminals (UE) are affected. However, the present invention is also useful in the case of low traffic, e.g., during night.

Further advantages are achieved by the embodiments of the invention indicated by the dependent claims.

According to a preferred embodiment of the invention, the at least one base station monitors call control messages of one or more of the following types: the random access attempts performed by the at least one user terminal; handover reports sent by the at least one user terminal.

From the monitored call control messages, one or more indications are provided. Call control messages comprise messages that are sent to control a telecommunication call, e.g., signalling data. A call control message comprises data that are not media data.

Concerning these call control message types, the following may be said:

Random Access attemps: During normal operation, the UEs are performing a Random Access procedure based on:
- Initial access from RRC_IDLE;
- Initial access after radio link failure;
- Handover requiring Random Access procedure;
- Adjustment of Timing Advance in case of "non-synchronised" UE

In the case of a cell outage the UEs will detect that the radio link is no longer available and will start the "radio link failure" procedure. In this case the UE will contact surrounding radio cells via the Random Access procedure. In 3GPP RAN2 it was decided that in LTE the UE in case of radio link failure will signal the old cell ID (i.e. the ID of cell affected by the outage) to the new radio cell, while for other radio access technologies the UE might not report the old cell ID.

Handover (HO): During mobility the UEs are moving from one radio cell to other radio cells by means of handover, which follows a specified HO procedure. In case of a cell outage. HO from the outage radio cell to surrounding cells of the same or other base stations will no longer occur. Additionally, no UE will leave the currently still active radio cells into the outage radio cell anymore. Normally the UEs report an "addition event" as soon as a new radio cell is within the reachability of the UE. In case of a cell outage, no UE in the still active cells will report the addition event of the outage cell any longer.

According to a preferred embodiment of the invention, an analysis of the random access attempts (A), and the HO processes (E) is performed:
(A) Each base station defines a mean number of Random Access attempts per a predefined time interval based on normal traffic behaviour, In the case of a cell outage all active UEs will carry out - after the timer(s) of the Radio Link Failure have expired - a Random Access towards the surrounding radio cell which now offers the best radio channel. Each UE timer(s) for the Radio Link Failure will probably have the same or at least similar values, as these are cell specific timer(s) which are defined by a Radio Resource Management (RRM) function of the serving base station. Therefore, a peak of Random Access attempts will occur in the surrounding radio cells shortly after the cell outage has occurred. If this peak is detected, I.e. the number of Random Access attempts abruptly increases above a certain level higher than the mean number (e.g. above 150 percent of the mean number of RACH access attempts), the surrounding base stations may set a trigger "A" that a cell outage in one or more of the surrounding radio cells has occurred. Therefore, in this preferred embodiment, the indication provided from the monitored random access messages is the number of Random Access attempts.

An extended trigger "A" includes a specification of the affected radio cell, e.g., a cell ID. It is possible that the UEs which are located in a radio cell affected by an outage, in case of a radio link failure, signal the "old" cell ID, i.e., the cell ID of the radio cell affected by the outage, when the UEs send a Random Access message. The "old" cell ID may be included in a Random Access message. Thus, a base station receiving a Random Access message receives the "old" cell ID, too. If a base station notices a peak of Random Access attempts, the base station may deduce that a cell outage has occurred. If the Random Access messages associated with the Random Access attempts comprise the cell ID of the radio cell affected by the outage, the base station also knows in which radio cell the cell outage has occurred.
(E) Each base station generates based on the 3GPP handover procedure a list of surrounding radio cells. This report is based on the UE handover reports towards the source radio cell which include the cell ID of the new target radio cell. In the case of cell outage the affected radio cell is no longer reported by the UEs, while other radio cells are still reported as possible handover targets. Based on an appropriate filter (e.g., the time interval over which the handover reports are monitored) a cell outage can be detected. If a deviation of the list of reported handover targets from a list of all surrounding radio cells is detected for a pre-defined time period, the surrounding base stations may set a trigger "E". Therefore, in this preferred embodiment, the indication provided from the monitored handover messages is the list of reported handover targets and/or handover sources.

Preferably, one of said indications is provided by averaging the number of said random access attempts over a predefined time period.

Preferably, the base station extracts, from a monitored random access attempt message, a cell ID. Said cell ID is an identification of the radio cell the reporting user terminal has been associated with. It is possible that the user terminal is still associated with this radio cell but now wants to leave it, looking for another serving radio cell by means of performing a regular handover. It is also possible that the user terminal is no longer associated with this radio cell because of an outage of the radio cell. In this case, the user terminal looks for another serving radio cell as a substitute by means of performing a random access attempt towards another radio cell within the radio link failure procedure.

The cell ID is used as one of the one or more indications. The base station performs said extractions of the cell IDs from the monitored random access attempt messages over a pre-defined time period. The base station generates a statistics of the reported cell IDs by counting how often each cell ID is reported in the monitored random access attempt messages. The number of times a cell ID has been reported in a pre-defined time period is called the frequency of the cell ID. The base station compares, for each of the reported cell IDs, the frequency of a reported cell ID with a respective reference, e.g., a cell ID frequency typical for the network when no radio cell outage has occurred, If the frequency of a reported cell ID differs from the respective reference in excess of a predefined threshold specific for the cell ID, the base station generates a respective trigger event.

According to a preferred embodiment of the invention, the base station receives from the at least one user terminal an identification (= ID) of the radio cell affected by the outage.

According to a preferred embodiment of the invention, the base station provides one of said indications by analysing said handover reports over a predefined time period. If a radio cell is no longer reported in said handover reports over a predefined time period, the base station generates a respective trigger event.

Preferably, the base station analyses said handover reports. Based on this analysis, the base station generates a list of neighbouring radio cells neighbouring said base station, i.e., radio cells which are neighbouring one or more of the radio cells associated with said base station.

It is also preferred that the base station correlates two or more of said indications to identify the one or more radio cells affected by an outage. A correlation can be made between two or more indications gained from the same radio cell. It is also possible that a correlation is made between one or more indications gained from different radio cells.

In a preferred embodiment, topological data is provided wherein said topological data specifies neighbouring radio cells of said plurality of radio cells and/or neighbouring base stations of the wireless telecommunication network. The topological data specifies neighbour relationships among the base stations, preferably also among the radio cells of the wireless telecommunication network. The neighbour relationships may be included in neighbourhood information. Neighbourhood information is basically required for radio resource management, for self-configuration and self-optimisation of radio access networks, e.g. for coverage optimisation and interference co-ordination.

An optimisation of the neighbour lists by adding or removing of neighbour relations is sometimes required during runtime because the initial configuration often does not reflect real topological situation. The (updated) neighbourhood relations may be stored in the base station node the new radio cell(s) belongs to or in the neighbouring base stations/radio cells or In OMC databases.

Preferably, said topological data is provided by the network operator. From said topological data a list is generated, the list specifying the base stations neighbouring the at least one base station. Preferably, the list also specifies the radio cells neighbouring the at least one radio cell associated with the at least one base station. Preferably, said list is generated by the at least one base station. The at least one base station monitors call control messages, and at least one of said neighbouring base stations neighbouring the at least one base station monitors call control messages. The at least one base station provides, from the monitored call control messages, at least one indication. The at least one neighbouring base station provides, from the monitored call control messages, at least one indication. The at least one base station compares the at least one indication provided by the at least one base station with respective references. The at least one neighbouring base station compares the at least one indication provided by the at least one neighbouring base station with respective references. If the at least one indication provided by the at least one base station differs from the respective reference in excess of a predefined threshold, the at least one base station generates a respective trigger event. If the at least one indication provided by the at least one neighbouring base station differs from the respective reference in excess of a predefined threshold, the at least one neighbouring base station generates a respective trigger event. The at least one base station indicates, dependent on one or more of said respective trigger events, that one or more radio cells are affected by an outage. The at least one neighbouring base station indicates, dependent on one or more of said respective trigger events, that one or more radio cells are affected by an outage. Preferably, the at least one base station correlates said at least one indication provided by the at least one base station and said at least one indication provided by the at least one neighbouring base station, preferably in combination with said topological data, for identification of the one or more radio cells affected by an outage.

Preferably, said topological data is provided by the network operator. From said topological data a list is generated, the list specifying the base stations neighbouring the at least one base station. Preferably, the list also specifies the radio cells neighbouring the at least one radio cell associated with the at least one base station. Preferably, said list is generated by the at least one base station.

An advantage of this aforementioned preferred embodiment is that the information gathered by at least two different base stations is merged in the OMC or by communication among the base stations so that a better localisation of the radio cell affected by the outage is possible.

Preferably, the at least one base station receives said at least one indication provided by the at least one neighbouring base station via a communication connection between the at least one base station and the at least one neighbouring base station, e.g., a wire-line connection.

According to a preferred embodiment of the invention, a deviation of the statistics of internal and external (UE information) values available in the base stations is used for the detection of a cell outage. From this deviation a base station can either deduce an enlargement of the size of one of its radio cells, or a rearrangement of its border towards other cells. In the first case, the base station can deduce that one of its neighbouring cells is in outage, although the base station does not know which of its neighbouring radio cells. In the second case, the base station can deduce that a certain neighbouring radio cell is in outage, i.e. the base station is able to identify the neighbouring radio cell in outage.

Convenient internal and external UE information values are:
- Channel Quality Information (CQI): During normal operation of the downlink, e.g., HSDPA and 3GPP LTE, the UEs are transmitting CQI values to the serving base station, to enable an optimised scheduling (HSDPA = High Speed Downlink Packet Access). The CQI value is mainly based on two effects: the distance (path loss) to the serving base station and the interference caused by other base stations. In the case of a cell outage the UEs previously located in the affected radio cell have to be served by the surrounding base stations leading to very low CQI values of such new UEs, as their distance to the serving base station is larger than in an error free scenario. On the other hand, already active UEs in the serving cell and in the vicinity of the outage cell will generate better, i.e. higher CQI values due to the better interference situation.
- Timing advance (TA): To enable a time synchronised reception of the individual uplink UE transmissions at the base station receiver, the base station has to allocate individually for each UE a Timing Advance value. In the case of a cell outage the surrounding base stations have to allocate a large TA to UEs previously located in the affected radio cell, i.e. the cell outage cell.
- Power Headroom: For up-link power control, the UE signals the available power headroom to the base station. During normal operation, the distribution of the UE power headroom of a cell has a characteristic shape which depends on the cell size and the radio transmission conditions. In case of outage of a neighbouring cell, UEs with bad channel conditions appear and the percentage of UEs with low headroom is increased accordingly.

According to a preferred embodiment of the invention, an analysis of the CQI values (B), the TA values (C), and the power headroom values (D) is performed:
(B) Each base station generates internally an indication of the CQI values reported by the UEs which are located in radio cells associated with the base station. The indication may be a distribution function, an average value, another statistical value, etc, In case of a cell outage, all UEs in the affected area that want to continue or to start a mobile service have to be served by other radio cells (from the same or other surrounding base stations) leading to low CQI values for such "new" UEs. As a consequence the indication changes, e.g., the shape of the CQI distribution function of new UEs will be shifted to lower values. On the other hand, the distribution of CQI values for already active UEs in the serving cell will contain better, i.e. higher CQI values due to the better interference situation in the vicinity of the outage cell. Dependent on a result of a comparison of CQI indications, e.g., CQI distribution functions, for "new" and "old" UEs with a respective reference, e.g., a CQI distribution function typical for a "normal" operation, the surrounding base stations may set a trigger "B", The term "normal" operation refers to the case where no radio cell of a base station and its neighbouring base stations is affected by an outage.
(C) Each base station generates internally an indication of the allocated TA values allocated individually to each UE. The indication may be a distribution function, an average value, another statistical value, etc. In case of a cell outage all UEs in the affected area that want to continue or to start a mobile service have to be served by other radio cells (from the same or other surrounding base stations) leading to high TA values. As a consequence the indication changes, e.g., the shape of the TA distribution function will be shifted to higher values. Dependent on a result of a comparison of a TA indication, e.g., a TA distribution function, with a reference, e.g., a TA distribution function typical for a "normal" operation, the surrounding base station may set a trigger "C".
(D) Each base station generates, for every associated radio cell, an indication of the power headroom of the UEs located in the radio cells associated with the base station. The indication may be a distribution function, an average value, another statistical value, etc. In case of a cell outage, all UEs located in the area of the affected radio cell that want to continue or to start a mobile service have to be served by other radio cells (associated with the same or other surrounding base stations). As a consequence the power headroom indication changes, e.g., the shape of the headroom distribution function will be shifted to lower values. Dependent on a result of a comparison of a power headroom indication, e.g., a power headroom distribution function, with a reference, e.g., a power headroom distribution function typical for a "normal" operation, the surrounding base station may set a trigger "D".

According to another preferred embodiment of the invention, at least one of said indications is provided by averaging the determined values of one of said RF-signal related parameters over a predefined time period. Preferably, a base station provides one of said indications by averaging the determined values of one of said RF-signal related parameters over a predefined time period. The predefined time period may be chosen from about several hundred milliseconds to several minutes.

According to another preferred embodiment of the invention, a report is sent from the at least one base station to the OMC, Said report indicates that one or more neighbouring radio cells neighbouring the at least one radio cell associated with the at least one base station are affected by an outage.

The use of the call control messages and the RF-signal related parameters for detecting an outage of a radio cell makes use of the following relationships. Shortly after a cell outage, the random access attempts per time reach a peak in the radio cells surrounding/neighbouring the affected radio cell. In case of an outage of a radio cell, the channel quality information CQI decreases for UEs previously located in the affected radio cell, and increases for UEs in a neighbouring radio cell. In case of an outage of a radio cell, the timing advance TA must be increased (by the base station serving these UEs) for UEs previously located in the affected radio cell. With regard to the power headroom, the percentage of UEs with low power headroom is increased in case of an outage of a radio cell. The handover pattern in an affected radio cell and in its neighbouring radio cells changes in case of an outage of a radio cell.

The decision that a cell outage in a radio cell has occurred can either be based on trigger values B and/or C and/or D, or a combination of the trigger values B to D. In this case only a report of a cell outage without detailed information about the cell ID can be generated towards the OMC.

According to a preferred embodiment, the decision that a cell outage in a radio cell has occurred can either be based on trigger value A, with the supporting triggers B and/or C and/or D, or a combination of the trigger values A to D. In this case only a report of a cell outage without detailed information about the cell ID may be generated towards the OMC.

With the extended trigger A and/or the trigger E, the affected radio cell can be identified and a report containing, e.g., the cell ID of the affected radio cell can be generated and sent to the OMC. Again a combination of trigger E together with A and/or B and/or C or a combination of the trigger values A to E may initiate a generation of the message to the OMC

The mean number of Random Access attempts per interval (trigger A), and the triggers B, C, D may be based on mean values defined on, e.g., daily basis or on configurable intervals (e.g. 07:00h to 08:00h, 08:00h to 9:00h, etc.).

Preferably, the base station analysing the more RF-signal related parameters and/or the call control messages may use mathematical algorithms specific for analysing and correlating the statistical behaviour. The application of the algorithm may result in a correlation coefficient which is a measure for a similarity of two data sets.

According to another preferred embodiment of the invention, a report is sent from the at least one base station to the OMC. Said report indicates that one or more radio cells are affected by an outage. It is possible that said report indicates that one or more neighbouring radio cells neighbouring the at least one radio cell associated with the at least one base station are affected by an outage. Preferably, the control unit of the base station generates the report, and the report is sent from the at least one base station to the OMC. By means of sending a report, a communication between a base station and the OMC is enabled.

According to another preferred embodiment of the invention, a report is sent from the at least one base station to at least one other base station. Said report indicates that one or more radio cells are affected by an outage. It is possible that the report indicates that one or more neighbouring radio cells neighbouring the at least one radio cell associated with the at least one base station are affected by an outage. Preferably, the control unit of the base station generates the report, and the report is sent from the at least one base station to at least one other base station. By means of sending a report, a communication among base stations is enabled.

Preferably, the step of indicating, dependent on one or more of said respective trigger events, that one or more radio cells are affected by an outage comprises sending a report from the at least one base station to the OMC and/or to at least one other base station.

For a decentralised OMC approach, the report with the cell ID of the affected radio cell will be sent to other surrounding cells.

These as well as further features and advantages of the invention will be better appreciated by reading the following detailed description of presently preferred exemplary embodiments taken in conjunction with accompanying drawings of which:
- Fig. 1: shows a block diagram of a wireless telecommunication network according to an embodiment of the invention;
- Fig. 2: shows a block diagram of the wireless telecommunication network of Fig. 1 when a radio cell is affected by an outage; and
- Fig. 3: shows a base station according to an embodiment of the invention serving user terminals.

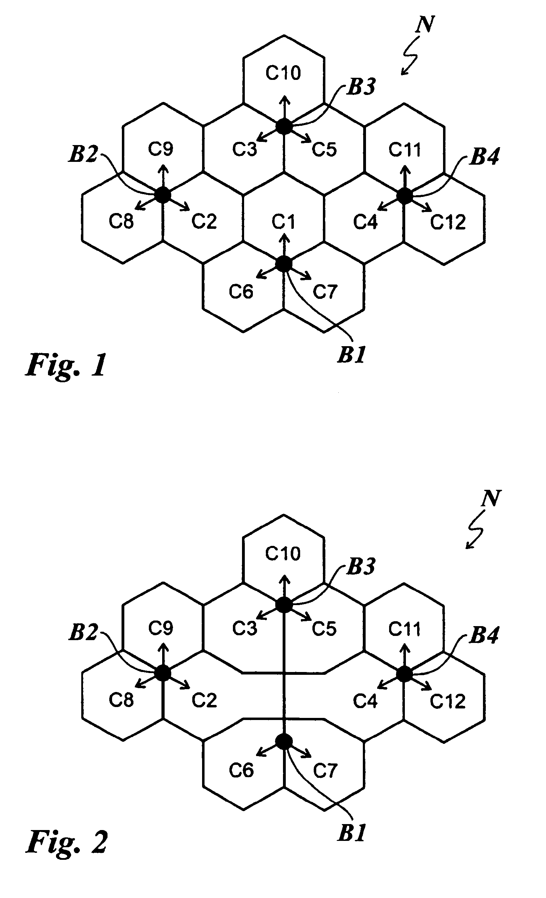

Fig. 1 shows a wireless telecommunication network N, e.g., a UMTS LTE network, comprising four base stations B1 to B4. The base stations B1 to B4 may be a LTE eNB. Each of the base stations B1 to B4 has three antennas. Each of these antennas covers a respective sector forming one of the radio cells C1 to C12.

The three antennas of base station B1 serve the three radio cells C1, C6, and C7. The three antennas of base station B2 serve the three radio cells C2, C8, and C9. The three antennas of base station B3 serve the three radio cells C3, C5. and C10. The three antennas of base station B4 serve the three radio cells C4, C11, and C12.

Users with user terminals may move around in the wireless telecommunication network N. A user terminal located in the area of a radio cell is served by the associated base station. For example, a user terminal located in the area of the radio cell C1 will be served by the upper antenna of base station B1.

Let us assume that the upper antenna of base station 81 suffers damages so that the corresponding radio cell C1 is affected by an outage. The radio cell C1 ceases to exist. The user terminals located in the area of the former radio cell C1 have to be served by radio cells neighbouring the former radio cell C1. Accordingly, the areas of the radio cells C2 to C7 neighbouring the former radio cell C 1 increase.

Fig. 2 shows a state of the wireless telecommunication network N when the radio cells C2 to C7 have segmented the area of the former radio cell C1 among them.

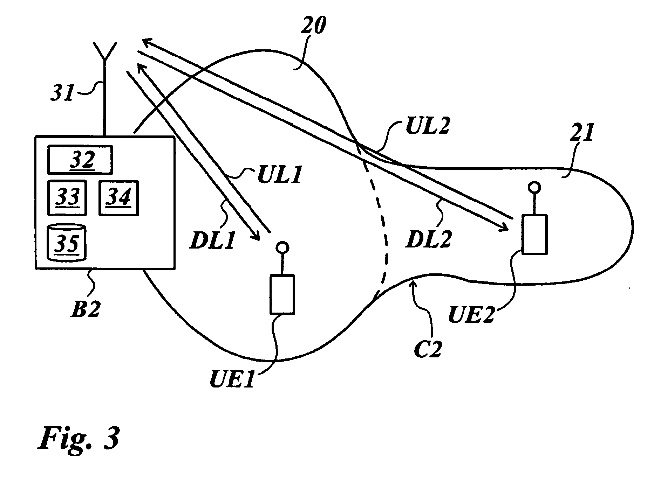

Fig. 3 shows the base station B2 and its associated, extended radio cell C2 after a part of the area of the affected radio cell C1 has been integrated into the radio cell C2. The area of the extended radio cell C2 shown in Fig. 3 corresponds to the area of the radio cell C2 shown in Fig. 2. For simplification, it is assumed that the extended radio cell C2 comprises an original area 20 and an additional area 21. Under realistic conditions, the original area 20 - and the additional area 21 - may dynamically change (increase or decrease), e.g., dependent on the workload of its associated base station or the workload of neighbouring base stations.

The original area 20 corresponds to the area of the radio cell C2 shown in Fig. 1. For simplification, it is assumed that the additional area 21 is a part of the area of the former radio cell C1. Generally, the additional area 21 may consist from one or more parts of one or more other cells.

The base station B2 serving the extended radio cell C2 comprises a radio air interface 31, e.g., an antenna, a transceiver unit 32, a control unit 33, a CPU 34, and a storage unit 35 (CPU = Central Processing Unit). The base station B2 is composed of one or several inter-linked computers, i.e., a hardware platform, a software platform basing on the hardware platform and several application programs executed by the system platform formed by the software and hardware platform. The functionality of the base station B2 are provided by the execution of these application programs. The application programs or a selected part of these application programs constitute a computer software product providing a call control service as described in the following, when executed on the system platform. Further, such computer software product is constituted by a storage medium storing these application programs or said selected part of application programs.

The base station B2 provides telecommunication service to a plurality of user terminals inside the radio cell C2. For sake of clarity only two user terminals UE1, UE2 are shown in Fig. 3. A first user terminal UE1 is located in the original area 20, and a second user terminal UE2 is located in the additional area 21. The first user terminal UE1 exchanges data information with the base station B2 via a radio air interface downlink connection DL1 and an uplink connection UL1.

The second user terminal UE2 exchanges data information with the base station B2 via a radio air interface downlink connection DL2 and an uplink connection UL2. The first user terminal UE1 and the second user terminal UE2 are moving between neighbouring radio cells. When moving from a source radio cell to a neighbouring target radio cell, the user terminals UE1, UE2 perform a handover procedure and send UE handover reports towards the base station B2 of the source radio cell C2. Preferably, these handover reports include the cell ID of the target radio cell. In the case of cell outage of a radio cell, the affected radio cell is no longer reported by the UEs UE1. UE2 as possible handover targets, while other radio cells are still reported as possible handover targets.

The base station B2 generates - according to the 3GPP handover procedure - a list of "foreign" surrounding radio cells surrounding the radio cell C2. The term "foreign" is meant to denote that the neighbouring radio cells C1, C3, C6 are not associated with the base station B2 detecting the outage. The list comprises the radio cells C1, C3, C6. It is also possible that the base station B2 receives this list of surrounding radio cells from a higher ranking entity of the network N, e.g.. from a network operator of the network N.

The base station B2 monitors the handover reports from the two user terminals UE1, UE2 over a certain time interval. The control unit 33 provides, from the monitored handover messages of the two user terminals UE1, UE2, an indication. This indication may be, e.g., the cell IDs of the radio cells which are reported during the time interval.

The control unit 33 compares said indication with a respective reference, e.g., the cell IDs of the radio cells that are on the list of the "foreign" surrounding radio cells surrounding the radio cell C2. The base station B2 detects a deviation of the list of reported handover targets from the list of all surrounding radio cells over a pre-defined time period, i.e., the base station B2 detects that the radio cell C1 has not been reported during the entire time period.

The predefined threshold in the case of the handover reports may be set to zero: that means a deviation whatsoever results in the generation of a trigger event "E". If a radio cell is not reported over the pre-defined time period, the control unit 33 generates a respective trigger event "E" specific for the handover process. Triggered by the trigger "E", the control unit 33 generates a message to the OMC that the "foreign" neighbouring radio cell C1 neighbouring the radio cell C2 associated with the base station 82 is affected by an outage.

## Claims

1. A method of detecting an outage of a radio cell (C1) in a wireless telecommunication network (N) comprising a plurality of radio cells (C1 to C12) and two or more base stations (B1 to B4), each radio cell (C1 to C12) associated with a base station (B1 to B4) providing telecommunication service to at least one user terminal (UE1, UE2) inside the radio cell (C1 to C12), the method comprising:
monitoring, by at least one of said base stations (B1 to B4) call control messages associated with at least one of the user terminals (UE1, UE2);
providing, from the monitored call control messages, one or more indications;
comparing said one or more indications with respective references;
if an indication differs from the respective reference in excess of a predefined threshold, generating a respective trigger event; and
indicating, dependent on one or more of said respective trigger events, that one or more radio cells (C1) are affected by an outage.

2. The method of claim 1,
**characterised in**
**that** the method further comprises:
monitoring, by the at least one base station (B1 to B4), call control messages of one or more of the following types:
• a random access attempt performed by the at least one user terminal (UE1, UE2);
• a handover report sent by the at least one user terminal (UE1, UE2).

3. The method of claim 2,
**characterised in**
**that** the method further comprises:
averaging the number of said random access attempts over a predefined time period; and
providing said averaged number as one of said indications.

4. The method of claim 2,
**characterised in**
**that** the method further comprises:
extracting, from a monitored random access attempt message, a cell ID as one of the one or more indications, said cell ID indicating the radio cell which the user terminal (UE1, UE2) sending the random access attempt message has been associated with;
performing said extraction over a pre-defined time period and
generating a statistics of the reported cell IDs;
comparing, for each of the reported cell IDs, the frequency of a reported cell ID with a respective reference; and
if the frequency of a reported cell ID differs from the respective reference in excess of a respective predefined threshold, generating a respective trigger event.

5. The method of claim 2,
**characterised in**
**that** the method further comprises:
providing one of said indications by analysing said handover reports over a predefined time period; and
if a radio cell (C1) is no longer reported in said handover reports over a predefined time period, generating a respective trigger event.

6. The method of claim 5,
**characterised in**
**that** the method further comprises:
generating, based on said handover reports, a list of neighbouring radio cells neighbouring said at least one base station (B1 to B4).

7. The method of claim 1,
**characterised in**
**that** the method further comprises:
correlating two or more of said indications to Identify the one or more radio cells affected by an outage.

8. The method of claim 1,
**characterised in**
**that** the method further comprises:
determining, by the at least one base station (B1 to B4), for at least one of the radio cells associated with the at least one base station (81 to B4) values of one or more RF-signal related parameters associated with at least one user terminal (UE1, UE2) inside the at least one radio cell; and
providing, from the determined values of the one or more RF-signal related parameters, one or more indications corresponding to the one or more RF-signal related parameters.

9. The method of claim 8,
**characterised in**
**that** the method further comprises:
determining, by the at least one base station (B1 to B4), for the at least one radio cell associated with the at least one base station (B1 to 84) values of one or more of the following RF-signal related parameters:
• the channel quality indicator reported by the at least one user terminal (UE1, UE2) inside the at least one radio cell;
• the timing advance allocated to the at least one user terminal (UE1, UE2) inside the at least one radio cell;
• the available power headroom signalled by the at least one user terminal (UE1, UE2) inside the at least one radio cell.

10. The method of claim 1,
**characterised in**
**that** the method further comprises the steps of:
sending a report to an OMC that one or more neighbouring radio cells neighbouring the at least one radio cell associated with the at least one base station are affected by an outage.

11. The method of claim 1,
**characterised in**
**that** the method further comprises the steps of:
sending a report to at least one other base station that one or more neighbouring radio cells neighbouring the at least one radio cell associated with the at least one base station are affected by an outage.

12. A base station (B1 to B4) for detecting an outage of a radio cell (C1) in a wireless telecommunication network (N) comprising a plurality of radio cells (C1 to C12), said base station (B1 to B4), and one or more other base stations (B1 to B4), each radio cell (C1 to C12) associated with a base station (B1 to B4) providing telecommunication service to at least one user terminal (UE1, UE2) inside the radio cell (C1 to C12), the base station (B1 to B4) comprising a control unit adapted to monitor call control messages associated with at least one of the user terminals (UE1, UE2); provide, from the monitored call control messages, one or more indications; compare said one or more indications with respective references; if an indication differs from the respective reference in excess of a predefined threshold, generate a respective trigger event; and indicate, dependent on one or more of said respective trigger events, that one or more radio cells (C1) are affected by an outage.

## Patentansprüche

1. Ein Verfahren zum Erkennen eines Ausfalls einer Funkzelle (C1) in einem drahtlosen Telekommunikationsnetzwerk (N) mit einer Mehrzahl von Funkzellen (C1 bis C12) und zwei oder mehreren Basisstation(en) (B1 bis B4), wobei jede Funkzelle (C1 bis C12), die mit einer Basisstation (B1 bis B4) assoziiert ist, einen Telekommunikationsdienst an mindestens ein Benutzerendgerät (UE1, UE2) innerhalb der Funkzelle (C1 bis C12) bereitstellt, wobei das Verfahren umfasst:
Überwachen, durch mindestens eine der besagten Basisstationen (B1 bis B4), von Rufsteuerungsnachrichten, welche mit mindestens einem der Benutzerendgeräte (UE1, UE2) assoziiert sind;
Bereitstellen, aus den überwachten Rufsteuerungsnachrichten, einer oder mehrerer Angabe(n);
Vergleichen der besagten einen oder mehreren Angabe(n) mit entsprechenden Referenzen;
wenn eine Angabe von der entsprechenden Referenz über einen vorgegebenen Grenzwert hinaus abweicht, Erzeugen eines entsprechenden Triggerereignisses; und
Anzeigen, in Abhängigkeit von einem oder mehreren der besagten entsprechenden Triggerereignisse, dass eine oder mehrere Funkzelle(n) (C1) von einem Ausfall betroffen ist/sind.

2. Das Verfahren nach Anspruch 1,
**dadurch gekennzeichnet,**
**dass** das Verfahren weiterhin umfasst:
Überwachen, durch die mindestens eine Basisstation (B1 bis B4), von Rufsteuerungsnachrichten eines oder mehrerer der folgenden Typen:
• Ein wahlfreier Zugriffsversuch, durchgeführt von dem mindestens einen Benutzerendgerät (UE1, UE2);
• eine Handover-Meldung, gesendet von dem mindestens einen Benutzerendgerät (UE1, UE2).

3. Das Verfahren nach Anspruch 2,
**dadurch gekennzeichnet,**
**dass** das Verfahren weiterhin umfasst:
Mitteln der Anzahl der besagten wahlfreien Zugriffsversuche über eine vorgegebene Zeitspanne; und
Bereitstellen der besagten gemittelten Anzahl als eine der besagten Angaben.

4. Das Verfahren nach Anspruch 2,
**dadurch gekennzeichnet,**
**dass** das Verfahren weiterhin umfasst:
Extrahieren, aus einer überwachten Nachricht über einen wahlfreien Zugriffsversuch, einer Zellen-ID als eine der einen oder mehreren Angaben, wobei die besagte Zellen-ID die Funkzelle, mit welcher das Benutzerendgerät (UE1, UE2), welches die Nachricht über den wahlfreien Zugriffsversuch sendet, assoziiert worden ist, anzeigt;
Durchführen der besagten Extrahierung über eine vorgegebene Zeitspanne, und Erzeugen einer Statistik der angezeigten Zellen-IDs;
Vergleichen, für eine jede der angezeigten Zellen-IDs, der Frequenz einer angezeigten Zellen-ID mit einer entsprechenden Referenz; und
wenn die Frequenz einer angezeigten Zellen-ID über einen entsprechenden vorgegebenen Grenzwert hinaus von der entsprechenden Referenz abweicht, Erzeugen eines entsprechenden Triggerereignisses.

5. Das Verfahren nach Anspruch 2,
**dadurch gekennzeichnet,**
**dass** das Verfahren weiterhin umfasst:
Bereitstellen der besagten Angaben durch Analysieren der besagten Handover-Meldungen über eine vorgegebene Zeitspanne; und
wenn eine Funkzelle (C1) über eine vorgegebene Zeitspanne nicht mehr in den besagten Handover-Meldungen angezeigt wird, Erzeugen eines entsprechenden Triggerereignisses.

6. Das Verfahren nach Anspruch 5,
**dadurch gekennzeichnet,**
**dass** das Verfahren weiterhin umfasst:
Erzeugen, auf der Basis der besagten Handover-Meldungen, einer Liste von benachbarten Funkzellen, welche mit der besagten mindestens einen Basisstation (B1 bis B4) benachbart sind.

7. Das Verfahren nach Anspruch 1,
**dadurch gekennzeichnet,**
**dass** das Verfahren weiterhin umfasst:
Korrelieren von zwei oder mehr Angaben, um die eine oder mehreren von einem Ausfall betroffene(n) Funkzelle(n) zu identifizieren.

8. Das Verfahren nach Anspruch 1,
**dadurch gekennzeichnet,**
**dass** das Verfahren weiterhin umfasst:
Bestimmen, durch die mindestens eine Basisstation (B1 bis B4), für mindestens eine der mit der mindestens einen Basisstation (B1 bis B4) assoziierten Funkzellen, von Werten eines oder mehrerer RF-signalbezogenen Parameter(s), welche(r) mit dem mindestens einen Benutzerendgerät (UE1, UE2) innerhalb der mindestens einen Funkzelle assoziiert ist/sind; und
Bereitstellen, aus den bestimmten Werten des einen oder mehrerer der RF-signalbezogenen Parameter, einer oder mehrerer Angabe(n), welche dem einen oder mehreren RF-signalbezogenen Parameter(n) entsprichtlentsprechen.

9. Das Verfahren nach Anspruch 8,
**dadurch gekennzeichnet,**
**dass** das Verfahren weiterhin umfasst:
Bestimmen, durch die mindestens eine Basisstation (B1 bis B4), für die mindestens eine mit der mindestens einen Basisstation (81 bis 84) assoziierte Funkzelle, von Werten eines oder mehrerer der folgenden RF-signalbezogenen Parameter:
• der Kanalqualitätsindikator, welcher von dem mindestens einen Benutzerendgerät (UE1, UE2) innerhalb der mindestens einen Funkzelle angezeigt wird;
• die Zeitvorverlegung, welche dem mindestens einen Benutzerendgerät (UE1, UE2) innerhalb der mindestens einen Funkzelle zugewiesen wird;
• die verfügbare Sendeleistungsdifferenz, welche von dem mindestens einen Benutzerendgerät (UE1, UE2) innerhalb der mindestens einen Funkzelle signalisiert wird.

10. Das Verfahren nach Anspruch 1,
**dadurch gekennzeichnet,**
**dass** das Verfahren weiterhin die folgenden Schritte umfasst:
Senden einer Meldung an eine OMC, dass eine oder mehrere benachbarte Funkzelle(n), welche mit der mindestens einen mit der mindestens einen Basisstation assoziierten Funkzelle benachbart ist/sind, von einem Ausfall betroffen ist/sind.

11. Das Verfahren nach Anspruch 1,
**dadurch gekennzeichnet,**
**dass** das Verfahren weiterhin die folgenden Schritte umfasst:
Senden einer Meldung an die mindestens eine andere Basisstation, dass eine oder mehrere benachbarte Funkzelle(n), welche mit der mindestens einen mit der mindestens einen Basisstation assoziierten Funkzelle benachbart ist/sind, von einem Ausfall betroffen ist/sind.

12. Eine Basisstation (B1 bis B4) zum Erkennen eines Ausfalls einer Funkzelle (C1) in einem drahtlosen Telekommunikationsnetzwerk (N) mit einer Mehrzahl von Funkzellen (C1 bis C12), der besagten Basisstation (B1 bis B4) und einer oder mehreren anderen Basisstation(en) (B1 bis B4), wobei jede Funkzelle (C1 bis C12), die mit einer Basisstation (B1 bis B4) assoziiert ist, einen Telekommunikationsdienst an mindestens ein Benutzerendgerät (UE1, UE2) innerhalb der Funkzelle (C1 bis C12) bereitstellt, wobei die Basisstation eine Steuereinheit umfasst, welche dazu ausgelegt ist, mit mindestens einem der Benutzerendgeräte (UE1, UE2) assoziierte Rufsteuerungsnachrichten zu überwachen; aus den überwachten Rufsteuerungsnachrichten eine oder mehrere Angabe(n) bereitzustellen; die besagte(n) eine oder mehreren Angabe(n) mit entsprechenden Referenzen zu vergleichen; wenn eine Angabe von der entsprechenden Referenz über einen vorgegebenen Grenzwert hinaus abweicht, ein entsprechendes Triggerereignis zu erzeugen; und in Abhängigkeit von einem oder mehreren der besagten Triggerereignisse anzuzeigen, dass eine oder mehrere Funkzelle(n) (C1) von einem Ausfall betroffen ist/sind.

## Revendications

1. Procédé de détection de panne d'une cellule de radiocommunication (C1) dans un réseau de télécommunication sans fil (N) comprenant une pluralité de cellules de radiocommunication (C1 à C12) et au moins deux stations de base (B1 à B4), chaque cellule de radiocommunication (C1 à C12) associée à une station de base (B1 à B4) fournissant un service de télécommunication à au moins un terminal utilisateur (UE1, UE2) à l'intérieur de la cellule de radiocommunication (C1 à C12), le procédé comprenant:
la surveillance, au moyen d'au moins une desdites stations de base (B1 à B4), des messages de contrôle d'appel associés à au moins un des terminaux utilisateur (UE1, UE2);
la fourniture, à partir des messages de contrôle d'appel surveillés, d'une ou plusieurs indications;
la comparaison de ladite ou desdites indications à des références respectives; si une indication diffère de la référence respective au-delà d'un seuil prédéfini, la génération d'un événement déclencheur respectif; et l'indication, en fonction d'un ou de plusieurs desdits événements déclencheurs respectifs, qu'une ou plusieurs cellules de radiocommunication (C1) sont affectées par une panne.

2. Procédé selon la revendication 1,
**caractérisé en ce que**
le procédé comprend en outre:
la surveillance, au moyen de l'au moins une station de base (B1 à B4), des messages de contrôle d'appel d'un ou de plusieurs des types suivants:
• tentative d'accès aléatoire effectuée par l'au moins un terminal utilisateur (UE1, UE2);
• rapport de transfert envoyé par l'au moins un terminal utilisateur (UE1, UE2).

3. Procédé selon la revendication 2,
**caractérisé en ce que**
le procédé comprend en outre:
le calcul de la moyenne du nombre desdites tentatives d'accès aléatoire au cours d'une période prédéfinie; et
la fourniture de ladite moyenne du nombre comme l'une desdites indications.

4. Procédé selon la revendication 2,
**caractérisé en ce que**
le procédé comprend en outre:
l'extraction, à partir d'un message de tentative d'accès aléatoire surveillé, d'une identification de cellule comme l'une parmi la ou les indications, ladite identification de cellule indiquant la cellule de radiocommunication à laquelle le terminal utilisateur (UE1, UE2) qui envoie le message de tentative d'accès aléatoire a été associé;
la réalisation de ladite extraction au cours d'une période prédéfinie et la génération d'une statistique des identifications de cellule rapportées;
la comparaison, pour chacune des identifications de cellule rapportées, de la fréquence d'une identification de cellule rapportée à une référence respective; et
si la fréquence d'une identification de cellule rapportée diffère de la référence respective au-delà d'un seuil prédéfini respectif, la génération d'un événement déclencheur respectif.

5. Procédé selon la revendication 2,
**caractérisé en ce que**
le procédé comprend en outre:
la fourniture d'une desdites indications en analysant lesdits rapports de transfert au cours d'une période prédéfinie; et
si une cellule de radiocommunication (C1) n'est plus rapportée dans lesdits rapports de transfert au cours d'une période prédéfinie, la génération d'un événement déclencheur respectif.

6. Procédé selon la revendication 5,
**caractérisé en ce que**
le procédé comprend en outre:
la génération, sur la base desdits rapports de transfert, d'une liste de cellules de radiocommunication voisines à proximité de ladite au moins une station de base (B1 à B4).

7. Procédé selon la revendication 1,
**caractérisé en ce que**
le procédé comprend en outre:
la mise en corrélation d'au moins deux desdites indications pour identifier la ou les cellules de radiocommunication affectée(s) par une panne.

8. Procédé selon la revendication 1,
**caractérisé en ce que**
le procédé comprend en outre:
la détermination, au moyen de l'au moins une station de base (B1 à B4), pour au moins une des cellules de radiocommunication associées à l'au moins une station de base (B1 à B4) des valeurs d'un ou de plusieurs paramètres relatifs au signal RF associés à au moins un terminal utilisateur (UE1, UE2) à l'intérieur de l'au moins une cellule de radiocommunication; et
la fourniture, à partir des valeurs déterminées du ou des paramètres relatifs au signal RF, d'une ou plusieurs indications correspondant au(x) paramètre(s) relatif(s) au signal RF.

9. Procédé selon la revendication 8,
**caractérisé en ce que**
le procédé comprend en outre:
la détermination, au moyen de l'au moins une station de base (B1 à B4), pour l'au moins une cellule de radiocommunication associée à l'au moins une station de base (B1 à B4), des valeurs d'un ou de plusieurs des paramètres relatifs au signal RF suivants:
• indicateur de la qualité du canal rapporté par l'au moins un terminal utilisateur (UE1, UE2) à l'intérieur de l'au moins une cellule de radiocommunication;
• avance temporelle attribuée à l'au moins un terminal utilisateur (UE1, UE2) à l'intérieur de l'au moins une cellule de radiocommunication;
• marge de puissance disponible signalée par l'au moins un terminal utilisateur (UE1, UE2) à l'intérieur de l'au moins une cellule de radiocommunication.

10. Procédé selon la revendication 1,
**caractérisé en ce que**
le procédé comprend en outre l'étape suivante:
envoyer un rapport à un OMC selon lequel une ou plusieurs cellules de radiocommunication voisines, à proximité de l'au moins une cellule de radiocommunication associée à l'au moins une station de base, sont affectées par une panne.

11. Procédé selon la revendication 1,
**caractérisé en ce que**
le procédé comprend en outre l'étape suivante:
envoyer un rapport à au moins une autre station de base selon lequel une ou plusieurs cellules de radiocommunication voisines, à proximité de l'au moins une cellule de radiocommunication associée à l'au moins une station de base, sont affectées par une panne.

12. Station de base (B1 à B4) pour détecter une panne d'une cellule de radiocommunication (C1) dans un réseau de télécommunication sans fil (N) comprenant une pluralité de cellules de radiocommunication (C1 à C12), ladite station de base (B1 à B4), et une ou plusieurs autres stations de base (B1 à B4), chaque cellule de radiocommunication (C1 à C12) associée à une station de base (B1 à B4) fournissant un service de télécommunication à au moins un terminal utilisateur (UE1, UE2) à l'intérieur de la cellule de radiocommunication (C1 à C12), la station de base (B1 à B4) comprenant un module de commande adapté pour surveiller des messages de contrôle d'appel associés à au moins un des terminaux utilisateur (UE1, UE2); fournir, à partir des messages de contrôle d'appel surveillés, une ou plusieurs indications; comparer ladite ou lesdites indications à des références respectives; si une indication diffère de la référence respective au-delà d'un seuil prédéfini, générer un événement déclencheur respectif; et indiquer, en fonction d'un ou de plusieurs desdits événements déclencheurs respectifs, qu'une ou plusieurs cellules de radiocommunication (C1) sont affectées par une panne.
